# EUROPEAN PATENT APPLICATION

(11) **EP 0 735 768 A1**
(43) Date of publication of application: **02.10.1996**
(21) Application number: 95302063.3
(22) Date of filing: 28.03.1995
(51) Int. Cl.: H04N 7/22

(54) **A fiber video distribution network architecture with distributed video sources**

(71) Applicant: TELECOMMUNICATION LABORATORIES, DGT, MOTC., Yang-Mei, Tao-Yuan Hsien (TW)
(72) Inventor: Lin, Duo Chang, Yang-Mei, Tao-Yuan Hsien (TW); Hwang, Cherng Jia, Yang-Mei, Tao-Yuan Hsien (TW); Wang, Hsang Jue, Yang-Mei, Tao-Yuan Hsien (TW); Liaw, Jy Wang, Yang-Mei, Tao-Yuan Hsien (TW); Liao, Hung Huei, Yang-Mei, Tao-Yuan Hsien (TW); Yu, Ben Mou, Yang-Mei, Tao-Yuan Hsien (TW); Cherng, Hong Long, Yang-Mei, Tao-Yuan Hsien (TW)
(74) Representative: Arthur, Bryan Edward

(57) **Abstract**

A highly flexible, high performance and economic fiber video network structure employs cascaded connection of N X N star fiber coupler to expand passive optical network . Using optical amplifier and single video channel modulating single channel laser to prevent intermodulation among video channels caused by laser non-linearity, dispersion and non-linearity of optical amplification.

## Description

### BACKGROUND OF THE INVENTION

### 1. Field of the Invention

The present invention relates to a fiber video distribution network using multiple low cost light sources, fiber star couplers and optical amplifiers to achieve high quality long distance multichannel video distribution without encountering the difficulties of intermodulation distortion in a conventional video or CATV distribution system.

### 2. Description of Related Art

In a conventional cable TV network, the broadcast is facilitated by sending the programs in the form of a multichannel composite signal from a single input location to a tree distribution network. The program provider must assemble all the programs at this location by assigning a carrier frequency to each program channel. Because coaxial cables are used as the transmission medium, the signal experiences substantial loss and therefore requires a large number of electronic amplifiers with good linearity, high power amplification and wide frequency bandwidth to obtain good video reception quality at subscriber sites. The video quality of the system, however, tends to degrade as the number of amplifiers increases. In addition, for optimum performance, these amplifiers require frequent tuning, thus increasing the maintenance cost.

Recently, the use of optical fiber in the transmission of video or TV signals has become popular because of its wide frequency bandwidth and low transmission loss. In the past few years, the availability of optical fiber amplifiers has made it even more attractive to use optical fiber in a video or TV distribution network.

The prevailing method of fiber optic video or TV transmission is to use a combined multiple video channel to modulate a single light source and transmit the resultant optical signal via fiber to a tree network for broadcasting. The light source used must be a high power diode laser with super linearity, low wavelength chirping and high resonance frequency and must be used in conjunction with a built-in optical isolator. Its wavelength chirping during modulation must be within the range of minimum dispersion of the fiber to be free from the induced non-uniform dispersion intermodulation among video channels. Furthermore, since amplitude modulation (AM) is currently used the light source must meet carrier-to-noise ratio requirements. Even the most expensive and best performing light source now available can only meet part of the requirements when a great number of channels are included for the modulation. The intermodulation among video channels caused by the interaction of wavelength chirping and the non-uniform gain of the optical amplifier makes the operation of the amplifier ineffective and thus limit the application of fiber optic technology for long distance transmission in a conventional video or CATV broadcasting network.

### SUMMARY OF THE INVENTION

It is accordingly an object of the present invention to provide an alternative fiber video distribution network architecture that can avoid all of the afore mentioned difficulties of conventional fiber optic or video transmission systems .

This object is achieved by using multiple light sources, fiber star couplers to connect the sources and amplifiers to compensate for the splitting of signals in the couplers.

In a particularly preferred embodiment of the invention, N by N fiber star couplers are connected in cascade such that video program providers from different locations can send their program directly via fiber to any of the couplers for downstream broadcasting or distribution.

Preferably the present invention uses a single video channel to modulate each laser so as to avoid intermodulation resulting from the nonlinearity of the laser. Since each laser is associated with only one channel, there is no multichannel intermodulation caused by the interaction of the laser wavelength chirping with the non-uniform dispersion of the fiber and the non-uniform gain of the optical amplifier. Thus, optical signals from all the lasers are combined in the coupler and the resultant signal from the output port of the coupler is transmitted through a fiber system incorporating an optical amplifier for long distance transmission without being affected by the above effects. In essence, the optical signal, which in the conventional video or TV distribution system is obtained by modulation of a laser by multichannel composite electrical signals, is now replaced in the present invention by the combination of optical signals each from an individual laser modulated only by a single channel video signal. The coupler performs the function of combining optical signals and since only one video or TV signal is involved with each laser, there is no intermodulation and the stringent linearity requirement of the laser can be greatly relaxed, resulting in the possibility of using regular low cost lasers. Furthermore, the carrier-to-noise ratio per channel is greatly increased because deeper modulation can be obtained with one channel as compared to a multichannel modulation of a single laser.

The present invention further provides a new network architecture that allows a program provider to use its own optical transmitter to transmit video programs directly from the provider's location and thus avoiding disruption of its program in the event one or more of the other lasers fail. This is a considerable advantage over the conventional system where the broadcasting of all the programs will stop if the laser fails. The multichannel optical outputs of the fiber can be delivered directly to the subscribers, connected to the existing CATV distribution system, or relayed to a low power, high frequency antenna for local wireless video or TV service. Thus, the present network architecture is more than the conventional architecture versatile and flexible to use.

Additional advantages of the present invention will be made apparent in the following description of the accompanying referenced drawings. Those skilled in the art will appreciate, however , that the drawings are only for the purpose of illustration and should not be considered as limiting the scope of the present invention.

### BRIEF DESCRIPTION OF THE DRAWINGS

FIG. 1 is a schematic diagram of the preferred embodiment of the present invention illustrating the arrangement and function of the distributed video sources.

FIG. 2 is a schematic diagram of the preferred embodiment of the present invention illustrating the basic structure of the network configuration.

FIGS. 3(a), 3(b), and 3(c) are schematic diagrams illustrating three possible applications at any one of the receiving terminals of the network in the preferred embodiment of the present invention.

FIGS. 4(a), 4(b), and 4(c) are schematic diagrams illustrating various possible configurations of any one of the fiber optic receiving terminals of the preferred embodiment of the present invention.

### DESCRIPTION OF THE PREFERRED EMBODIMENT

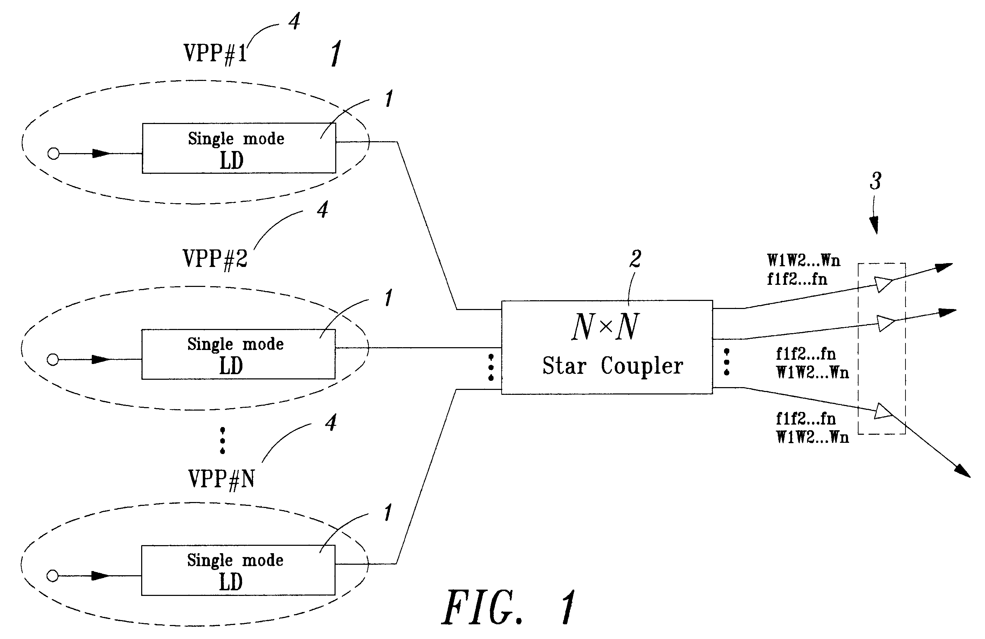

Referring to FIG. 1, each video program provider (VPP) has its own single mode laser diode 1. The single mode laser is of a lower cost type (less stringent in the requirements of linearity, wavelength chirping and side mode suppression) compared to the very expensive one used in the current multichannel CATV system. Laser diode 1 is modulated by a single channel video or TV signal and the resulting optical signal is transmitted to an N by N fiber star coupler 2. The coupler 2 combines similar signals from all laser diodes and distributes the resultant signal to the N output ports for receiving or further transmission and distribution. The modulation of each individual laser can be amplitude modulation (AM), frequency modulated (FM), compressed video digital keying modulated (CVDKM), or a combination of two or more of the above. When AM or CVDKM (such as MPEG1 or MPEG2) is adopted, the channel carrier frequencies used are preferably within the conventional TV frequency band of 300-600 MHz for compatibility with the conventional TV channels and to avoid signal interference caused by the second and third harmonics of the channel carriers. When FM is adopted, the carrier frequencies used are preferably within 1-2 GHz because of the large bandwidth requirement for FM modulation. Furthermore, regardless of the modulation scheme used, the optical wavelength of each laser should be separated by at least 0.1 nm to avoid generation of noise caused by optical heterodyne among all wavelengths of the lasers.

Although each video or TV channel still can consist of second and third harmonics because of the nonlinearity associated with each laser, no intermodulation will be produced by the transmission of optical signals from all of the lasers since the fiber is basically a linear medium for all these signals. The transmission of each video or TV channel can be considered as independent from the other channels because each channel is carried by a separate optical signal. This means that the intermodulation caused by the nonlinearity of the laser and by the effects of fiber dispersion and the amplifier's nonuniform gain in combination with the wavelength chirping of the laser no longer exists. The present invention thus allows the use of optical amplifiers for long distance transmission of multichannel videos and distribution to many output terminals. In addition, the single channel modulation of a single laser can yield a modulation index as high as 80% per, channel as opposed to a conventional system of less than 4% per channel, boosting the signal-to-noise ratio by at least 26 dB per channel over that of a conventional system. Therefore, lower cost, lower power and less linear lasers can be used in the present invention. The present invention thus overcomes the difficulties of the conventional system which can only use lasers with very high power, super linearity and extremely low frequency chirping, and which can use optical amplifiers to only a limited capacity.

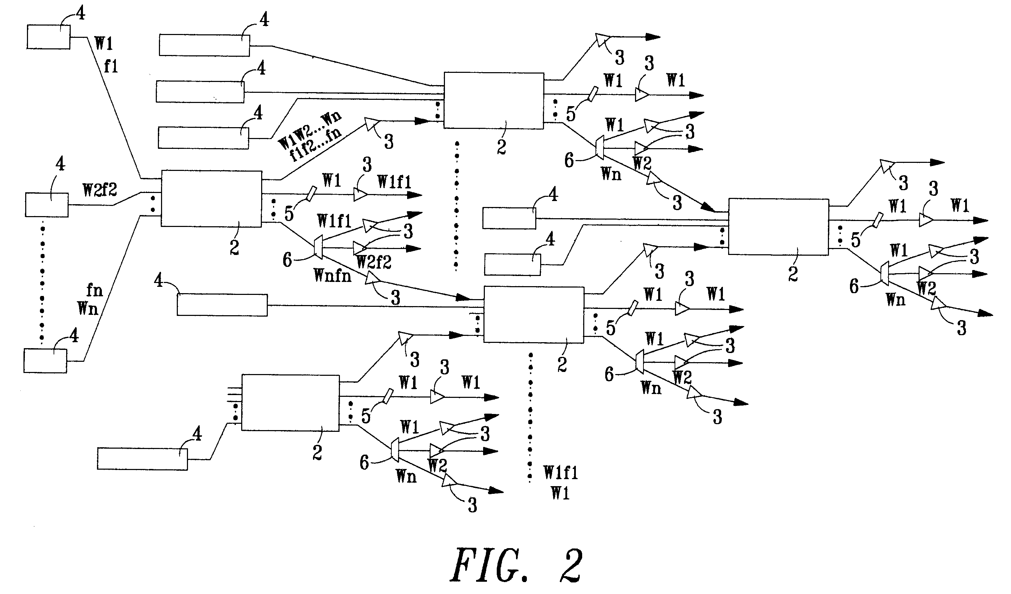

FIG. 2 illustrates the basic network configuration of the present invention. The network uses the N by N fiber star coupler 2 to combine the optical signals from the N input ports and to distribute the combined signal to the N output ports. The combined signal from each output port can be transmitted down stream through the fiber and can be optically amplified by the amplifier 3 if necessary. Such a signal can either be sent to the receiver terminals or to another fiber star coupler 2 for further combination with other signals from still other locations. The resultant signal can again be amplified by another amplifier 3 and the process can be repeated as needed. To prevent a possible increase in shot noise and relative intensity noise caused by too many optical signals from too many programs near the downstream end, an optical filter 5 or a diffraction grating 6 for a specific wavelength can be used to select certain wavelengths for further downstream broadcasting.

Using the above network, the video program provider can send its program by a modulated optical signal via optical fiber to the fiber star coupler where it combines with other signals from other providers and the combined signal is again distributed to many other locations. To perform the same program distribution by the conventional technique, the individual optical signal must first be detected by an optical receiver for conversion into an electrical signal, which is then demodulated to a base-band frequency. The base-band frequency is then used to modulate a carrier frequency corresponding to the channel frequency of a television set. Different carrier frequencies are then combined electrically and the resulting composite signal is used to modulate a very expensive high power, super linear and low chirping laser. The modulated optical signal is then sent through a single fiber for down stream broadcasting. Compared to the conventional network, it is clear that the present invention can greatly reduce the cost of broadcasting and simultaneously increase the application flexibility of the network.

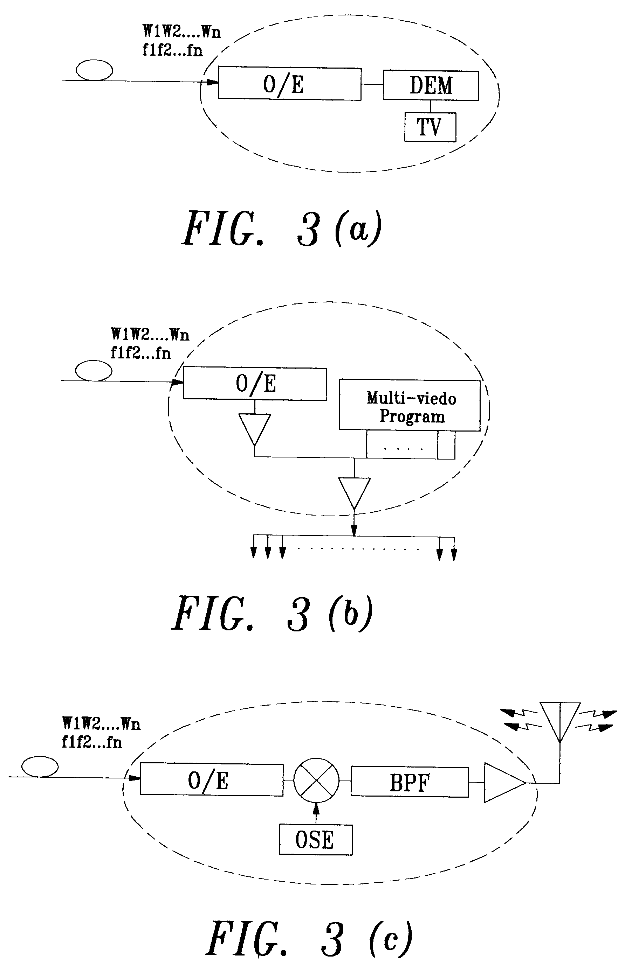

FIG. 3 shows several examples of the applications at the receiving terminals of the present invention. FIG. 3 (a) illustrates a direct reception, FIG. 3 (b) illustrates for conventional CATV head end re-transmission application and FIG. 3 (c) illustrates a low power local area wireless re-transmission application.

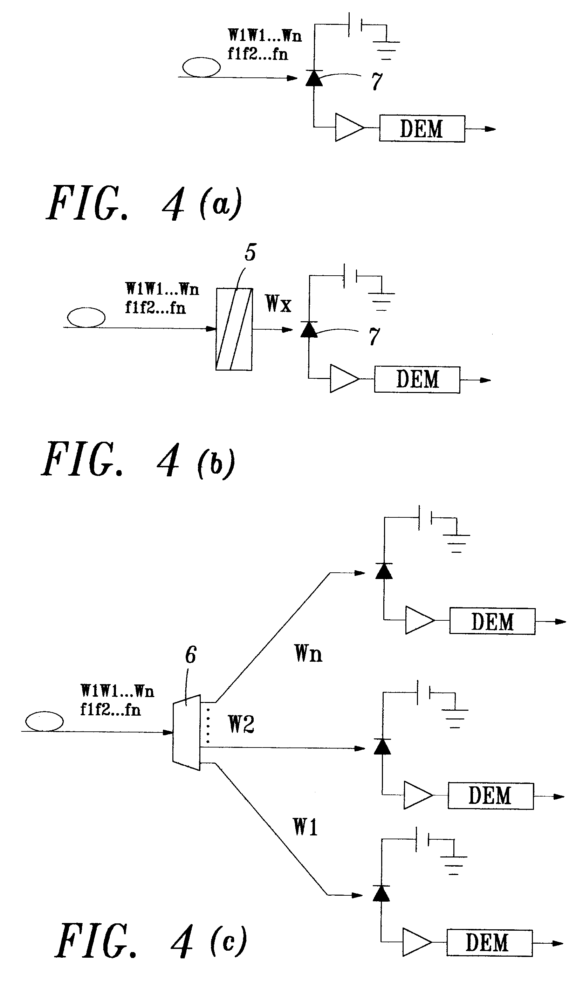

Depending on the cost, the signal quality and the number of channels, FIG. 4 shows several techniques for detecting the optical signal at a receiving terminal. FIG. 4 (a) illustrates the situation in which the combined optical signal from the fiber is detected and converted to electrical signals by photodiode 7. The arrangement is simple but the photodiode may be loaded with too many optical signals, resulting in the generation of excessive shot noise and relative intensity noise, and hence a reduction of carrier-to-noise ratio. Although this arrangement may be applicable only to the situation where only a few AM channels are involved, it should be useful to many FM and compressed video digital keying modulation channels where a smaller carrier-to-noise ratio is required.

In FIG. 4 (b), an optical filter 5 is placed in front of a photodiode 7 to receive only signals in a specific wavelength range. The filter blocks out the optical signals which are temporarily not intended for use in broadcasting. It thus reduces the associated shot noise and relative intensity noise, increasing the signal-to-noise ratio and thus the received video quality. In FIG. 4 (c), the diffraction grating 6, used as a wavelength division demultiplexer, is placed in front of the photodiode 7. This arrangement can not only allow reception of optical signals of different wavelengths but can also increase the signal-to-noise ratio by reducing the total optical power to each photodiode.

The present invention thus overcomes the disadvantages of the conventional video or CATV distribution network in which expensive lasers with super linearity, high power and low frequency chirping must be employed and in which optical amplifiers can not be effectively used for long distance transmission. The present invention instead allows use of low cost and low power lasers, and use of optical amplifiers to full capacity. When lasers of better linearity and higher power are used, the present invention can even accommodate transmission of more than one video channel per laser because each laser can be modulated with more than one video signal without creating significant intermodulation. The advantages of the present invention are set forth below:
1. Each video or TV program provider can transmit its video program directly from its own location via optical fiber to the distribution network. There is no need to centralize all the programs at the head end and to use very expensive equipment to broadcast them as is done in conventional video or CATV distribution systems. The failure of one laser transmitter does not affect the others and hence no service disruption of the rest of the programs occurs. On the other hand, the failure of the laser transmitter in a conventional system can mean a total blackout of all the programs.
2. Various modulation and demodulation methods can be used simultaneously in the present invention. This means that establishment of a future high performance video distribution system can be gradually accomplished with great flexibility by taking into account existing technical capability, cost and practical requirements.
3. Each laser is modulated by only one video or TV channel, and thus intermodulation due to laser nonlinearity and interactions of laser wavelength chirping with fiber dispersion and with gain non-uniformity of optical amplification will occur among all the video channels. This means that higher modulation index and hence high signal-to-noise ratio can be obtained with relatively low cost lasers which have much less stringent requirements on output power, linearity and wavelength chirping.
4. An added advantage derived from Item 3 above is that multiple video channels can now be transmitted longer distances by the use of cascaded optical amplifiers. This is a unique feature that the conventional video transmission has yet to achieve.
5. The fiber distribution network of the present invention makes use of passive fiber star couplers for signal combination and distribution. Thus, it is convenient to continuously expand the system by the addition of couplers and amplifiers at the output and input terminals. New program providers can easily add their programs to the network for broadcasting and more new subscribers can also be conveniently added.
6. The network of the present invention can be equipped with wavelength division demultiplexers to redistribute optical signals of different wavelengths to different transmission routes. With the inclusion of optical filters. The preferred network can also select signals with specific wavelengths and block out signals which are temporarily not intended for service use. Such an arrangement also reduces the shot and relative intensity noises at the receiver and thereby enhances the quality of the received video signals.
7. The network of the present invention fully utilizes the large bandwidth and low loss characteristics of optical fiber and is therefore very suitable for transmitting a great number of broadband video or TV channels over a long distance without the use of repeaters. A repeaterless system in general can provide a more stable and higher quality signal and is thus more suitable for connection to a conventional CATV head end to provide video programs or to a local station for low power wireless TV broadcasting.

It is thus clear that the objects of the present invention set forth herein, as well as those made apparent from the foregoing description, are efficiently attained. While the preferred embodiment of the invention has been set forth for purpose of disclosure, modifications of the disclosed embodiment of the invention as well as other embodiments thereof may occur to those skilled in the art. Accordingly, the appended claims are intended to cover all embodiments which do not depart from the spirit and the scope of the invention.

## Claims

1. A fiber video distribution network architecture with distributed video sources, comprising:
a single mode laser diode for each of a plurality of program providers;
modulation means of modulation light from each of said single mode laser diodes;
a fiber star coupler having an input port connected to receive modulated light originating from said plurality of single mode laser diodes of said plurality of program provider, combine said modulated light originating from said plurality of single mode laser diodes of said plurality of program providers, and distributing the modulated light to a plurality of output ports for distribution through optical fiber routes to further elements of said network, and ultimately to a plurality of subscribers, each having a receiver which includes a photodiode for converting said combined optical signals to electrical signals.

2. A fiber video distribution network architecture as claimed in claim 4, wherein said modulating means include modulating means selected from the group consisting of an amplitude modulator, an frequency modulator, a compressed video digital keying modulator, and a combinations of the amplitude modulator, frequency modulator, and video digital keying modulator.

3. A fiber video distribution architecture as claimed in claim 4, wherein said receiver has a bandwidth sufficient to handle all signals modulated by any of the moulating means in said group.

4. A fiber video distribution network architecture as claimed in claim 6, wherein at least one of said optical fiber routes includes at least one additional fiber star coupler.

5. A fiber video distribution network architecture as claimed in claim 4, wherein each of said optical fiber routes includes at least one optical amplifiers arranged to compensate for splitting losses in said coupler.

6. A fiber video distribution network architecture as claimed in claim 4, further comprising optical filters and diffraction grating wavelength demultiplexers arranged to select optical signals of desired wavelengths and to thereby simultaneously reduce shot noise and relative intensity noise by blocking out optical signals which are not intended for a selected broadcast.

7. A fiber video distribution architecture as claimed in claim 4, wherein said receiver has an optical filter positioned in front of said photodiode, said optical filter being arranged to select optical signals of desired wavelengths and thereby simultaneously reduce shot noise and relative intensity noise in said photodiode and increase a carrier-to-noise ratio of a received optical signal to provide higher quality video reception.

8. A fiber video distribution architecture as claimed in claim 4, wherein said receiver includes a diffraction grating wavelength dividsion demultiplexer placed at an exit end of said fiber , said grating being arranged to direct said received optical signals with different wavelengths to different photodiodes detects an optical signal with only wavelength and with a power which is low in comparison with the power of the received optical signals, thereby reducing shot noise and relative intensity noise and increase a signal-to-noise ratio to provide higher quality video reception.
